(19) Europäisches Patentamt / European Patent Office / Office européen des brevets

(11) **EP 3 687 864 B1**

(12) **EUROPÄISCHE PATENTSCHRIFT**

(45) Veröffentlichungstag und Bekanntmachung des Hinweises auf die Patenterteilung:
**28.12.2022  Patentblatt 2022/52**

(21) Anmeldenummer: **18758850.4**

(22) Anmeldetag: **15.08.2018**

(51) Internationale Patentklassifikation (IPC):
***B60R 21/0136*** (2006.01)

(52) Gemeinsame Patentklassifikation (CPC):
**B60R 21/0136**

(86) Internationale Anmeldenummer:
**PCT/EP2018/072120**

(87) Internationale Veröffentlichungsnummer:
**WO 2019/063187 (04.04.2019 Gazette 2019/14)**

(54) **VERFAHREN ZUR ERZEUGUNG EINES AUSLÖSESIGNALS ZUM AUSLÖSEN MINDESTENS EINER SICHERHEITSFUNKTION EINES KRAFTFAHRZEUGS**

METHOD FOR GENERATING A DISCONNECTION SIGNAL FOR TRIGGERING AT LEAST ONE SAFTEY FUCNTION OF A MOTOR VEHICLE

PROCÉDÉ POUR GÉNÉRER UN SIGNAL DE DÉCLENCHEMENT POUR DÉCLENCHER AU MOINS UNE FONCTION DE SÉCURITÉ D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2017  DE 102017217015**

(43) Veröffentlichungstag der Anmeldung:
**05.08.2020  Patentblatt 2020/32**

(73) Patentinhaber: **Robert Bosch GmbH
70442 Stuttgart (DE)**

(72) Erfinder:
• **KOENIG, Simon
  70839 Stuttgart (DE)**
• **LANG, Gunther
  70563 Stuttgart (DE)**

(56) Entgegenhaltungen:
**DE-A1-102011 011 962     DE-A1-102014 208 143**

**EP 3 687 864 B1**

**Beschreibung**

Stand der Technik

Zur Detektion eines Fußgängeraufpralls auf eine Vorderseite eines Kraftfahrzeugs werden seit einigen Jahren Druckschlauchsensoren (PTS = Pressure Tube Sensor) eingesetzt. Der Druckschlauch befindet sich dabei üblicherweise zwischen einem Stoßfängerquerträger und einem davor liegenden Absorptionsschaum. Der Druckschlauch ist mit Luft gefüllt und an seinen Enden mit jeweils einem Drucksensor abgeschlossen. Die bei einem Fußgängeraufprall auftretende Deformation des Schaums führt somit zu einer Kompression des Schlauches, wodurch ein Drucksignal von den beiden Drucksensoren gemessen wird. Dieses wird von einem Steuergerät, i.d.R. dem zentralen Airbagsteuergerät, eingelesen und dort verarbeitet, um einen Fußgängeraufprall zu detektieren. Fahrzeugunfälle werden herkömmlicherweise von einem auf dem Fahrzeugtunnel angebrachten Airbagsteuergerät mit Beschleunigungssensorik, ggfs. ergänzt um externe Sensorik, erkannt.

**[Seite 1a einfügen]**

Offenbarung der Erfindung Hier wird ein besonders vorteilhaftes Verfahren zur Erzeugung eines Auslösesignals zum Auslösen mindestens einer Sicherheitsfunktion eines Kraftfahrzeugs vorgestellt. Die abhängigen Ansprüche geben besonders vorteilhafte Weiterbildungen des Verfahrens an.

Das beschriebene Verfahren beruht insbesondere auf der Erkenntnis, dass ein Druckschlauch nicht nur für die Fußgängererkennung, sondern auch zur verbesserten Erkennung von Fahrzeugunfällen verwendet werden kann. Das gilt insbesondere für spezielle Fahrzeugcrashs wie beispielsweise einem mittigen Pfahlaufprall. Da beim Pfahlaufprall keine Crashstrukturen des Fahrzeugs Einfügeseite Aus der DE 10 2014 208 143 A1 ist ein Verfahren nach dem Oberbegriff des Anspruch 1 zum Aktivieren eines Fußgängerschutzmittels eines Fahrzeugs bekannt. Das Verfahren umfasst einen Schritt des Ausführens eines ersten Schwellenwertvergleichs, wobei in dem ersten Schwellenwertvergleich zumindest ein Signalmerkmal eines ersten Sensorsignals mit einem Anpassungsschwellenwert verglichen wird, einen Schritt des Bestimmens eines Schwellenwertanpassungswertes basierend auf einem Ergebnis des ersten Schwellenwertvergleichs und einen Schritt des Ausführens eines zweiten Schwellenwertvergleichs, wobei in dem zweiten Schwellenwertvergleich zumindest ein Signalmerkmal eines zweiten Sensorsignals mit einem unter Verwendung des Schwellenwertanpassungswertes angepassten Auslöseschwellenwert zum Auslösen des Fußgängerschutzmittels verglichen wird, wobei das erste Sensorsignal ein Drucksignal eines Drucksensors des Fahrzeugs repräsentiert und das zweite Sensorsignal ein Beschleunigungssignal eines Beschleunigungssensors des Fahrzeugs repräsentiert oder das erste Sensorsignal ein Beschleunigungssignal eines Beschleunigungssensors des Fahrzeugs repräsentiert und das zweite Sensorsignal ein Drucksignal eines Drucksensors des Fahrzeugs repräsentiert.

getroffen werden, lässt sich dieser mit konventioneller Crashsensorik nur relativ spät erkennen, wohingegen er durch den Druckschlauch sehr schnell erkannt werden kann. Zudem kann mit dem beschriebenen Verfahren die Fußgängerschutzerkennung verbessert und robuster gestaltet werden.

Für das beschriebene Verfahren sind mindestens zwei Druckschlauchsensoren vorgesehen. Auf Basis dieser Sensoren können insbesondere wichtige Merkmale von Kollisionen, wie beispielsweise eine Kollisionsgeschwindigkeit (die auch als eine Intrusionsgeschwindigkeit bezeichnet werden kann) und/oder eine Richtung der Kollision, identifiziert werden und diese für eine verbesserte Crasherkennung und Auslösung von Sicherheitsfunktionen (wie beispielsweise Rückhaltemitteln) genutzt werden.

Durch das beschriebene Verfahren kann so insbesondere eine präzisere und robustere Ansteuerung von Rückhaltemitteln ermöglicht werden. Dies kann insbesondere dadurch geschehen, dass die für die Crashschwere essenziell wichtigen Parameter Kollisionsgeschwindigkeit und Richtung des Aufpralls explizit bestimmt werden können. Dies ist mit herkömmlicher Sensorik nicht möglich. Stattdessen arbeiten aktuelle Crashalgorithmen mit impliziten Merkmalen, die nur indirekt Rückschlüsse über diese zentralen Parameter zulassen. Dies führt zu einer relativ ungenauen Erkennung der Crashschwere und des Crashtyps.

Für das beschriebene Verfahren wird ein System mit zwei Druckschlauchsensoren (also ein 2-PTS-System) verwendet. Die Druckschlauchsensoren sind räumlich voneinander beabstandet angeordnet. Bei einer Anordnung umfassend zwei Druckschlauchsensoren handelt es sich insbesondere um ein System mit zwei wohldefinierten Kontaktschaltern (den Druckschlauchsensoren). Die Druckschlauchsensoren sind vorzugsweise in einer (insbesondere vorderen) Knautschzone des Kraftfahrzeugs angeordnet. Damit können zentrale Parameter für die Crashschwere, insbesondere die Kollisionsgeschwindigkeit und/oder die Richtung des Aufpralls, bestimmt werden. Die explizite Bestimmung der Kollisionsgeschwindigkeit und/oder der Richtung des Aufpralls können eine wesentlich präzisere und genauere Crasherkennung und damit der Ansteuerung der für die ermittelte Crashschwere nötigen Rückhaltemittel ermöglichen.

Das beschriebene Verfahren umfasst die Verfahrensschritte a) bis c), die vorzugsweise in der angegebenen Reihenfolge durchgeführt werden. In Schritt a) des beschriebenen Verfahrens werden von mindestens zwei Druckschlauchsensoren jeweilige Signale empfangen.

Die Druckschlauchsensoren weisen vorzugsweise jeweils einen mit Luft gefüllten Schlauch (vorzugsweise aus einem Material umfassend Silikon) auf, der an einem Ende, vorzugsweise an beiden Enden, mit einem Drucksensor abgeschlossen ist. Im Folgenden wird beispielhaft davon ausgegangen, dass zwei Drucksensoren pro Druckschlauchsensor vorgesehen sind. Mit den Drucksensoren können Daten aufgenommen werden, aus denen auf einen Aufprall auf den Schlauch geschlossen werden kann. Über eine entsprechende Elektronik kann aus diesen Daten insbesondere ein Signal des Druckschlauchsensors erzeugt werden. Das Signal kann dabei insbesondere die Tatsache indizieren, dass ein Aufprall mit dem Druckschlauchsensor erfasst wurde. Der Zeitpunkt der Ausgabe des Signals kann den Zeitpunkt des Aufpralls (ggf. um eine Verarbeitungszeit verzögert) angeben. Alternativ kann das Signal auch kontinuierlich ausgegeben werden und bei einem erfassten Aufprall in vorgegebener Weise verändert werden.

Die Signale der mindestens zwei Druckschlauchsensoren werden von einem Steuergerät empfangen, das zur Durchführung des beschriebenen Verfahrens bestimmt und eingerichtet ist.

In Schritt b) des beschriebenen Verfahrens wird mindestens ein Kollisionsparameter aus den gemäß Schritt a) empfangenen Signalen bestimmt. Als Kollisionsparameter kommt jede Größe in Betracht, die einen Unfall eines Kraftfahrzeugs charakterisieren kann. Vorzugsweise ist der Kollisionsparameter derart definiert, dass dieser eine Aussage über die Art und/oder Schwere eines Unfalls ermöglicht. Der Kollisionsparameter kann in dem Steuergerät unter Verwendung einer entsprechenden Software bestimmt werden.

In Schritt c) des beschriebenen Verfahrens wird in Abhängigkeit von dem in Schritt b) bestimmten mindestens einen Kollisionsparameter ein Auslösesignal für die mindestens eine Sicherheitsfunktion ausgegeben.

Bei der mindestens einen Sicherheitsfunktion kann es sich beispielsweise um einen Airbag, einen Gurtstraffer oder einen Eingriff in die Steuerung des Kraftfahrzeugs (beispielsweise durch eine automatische Notbremsung und/oder ein automatisch eingeleitetes Ausweichmanöver) handeln. Vorzugsweise umfasst das Kraftfahrzeug eine Mehrzahl von Sicherheitsfunktionen. Die mindestens eine Sicherheitsfunktion kann insbesondere durch ein Auslösesignal ausgelöst werden, welches vorzugsweise insbesondere von dem Steuergerät ausgegeben wird. Mit Schritt c) des beschriebenen Verfahrens kann die aus dem Kollisionsparameter erkennbare Art und/oder Schwere des Unfalls beim Auslösen der mindestens einen Sicherheitsfunktion berücksichtigt werden. So kann der Zeitpunkt und/oder die Art der Auslösung der mindestens einen Sicherheitsfunktion in Abhängigkeit des Kollisionsparameters bestimmt werden. Auch kann bestimmt werden, ob die mindestens eine Sicherheitsfunktion überhaupt auszulösen ist. Bei mehreren Sicherheitsfunktionen kann zudem eine Auswahl an auszulösenden Sicherheitsfunktionen getroffen werden und/oder entschieden werden, in welcher Reihenfolge diese auszulösen sind.

Nach der Erfindung werden in Schritt a) jeweilige Signale von mindestens zwei Druckschlauchsensoren empfangen, die zumindest in Fahrtrichtung des Kraftfahrzeus beabstandet voneinander angeordnet sind.

Unter der Fahrtrichtung ist hier die Richtung zu verstehen, in die sich das Kraftfahrzeug bei üblicher Vorwärtsfahrt bewegt. Ein frontaler Aufprall kann durch den in Fahrtrichtung weiter vorne liegenden Druckschlauchsensor zuerst und erst mit Verzögerung auch mit dem anderen Druckschlauchsensor erfasst werden. Durch die zeitliche Differenz, mit der die beiden Druckschlauchsensoren den Aufprall detektieren, kann insbesondere eine Kollisionsgeschwindigkeit bestimmt werden.

In einer Hochrichtung, also insbesondere quer (bzw. senkrecht) zur Fahrtrichtung, können die Druckschlauchsensoren ebenfalls voneinander beabstandet sein. Es ist aber auch möglich, dass die Druckschlauchsensoren in der Hochrichtung auf gleicher Höhe angeordnet sind.

In einer weiteren bevorzugten Ausführungsform des Verfahrens repräsentieren die in Schritt a) empfangenen Signale der mindestens zwei Druckschlauchsensoren jeweils zumindest einen der folgenden Parameter:

- einen Auftreffzeitpunkt $t_1$ $t_2$ und
- einen Auftreffort $s_1$, $s_2$.

Damit, dass die empfangenen Signale die genannten Parameter Auftreffzeitpunkt ($t_1$, $t_2$) und Auftreffort ($s_1$, $s_2$) repräsentieren, ist insbesondere gemeint, das in den empfangenen Signalen Informationen enthalten sind, aus denen die genannten Parameter ermittelbar sind. Vorzugsweise werden in Schritt a) Druckverläufe hinsichtlich der von den Druckschlauchsensoren empfangen. In einem Steuergerät (bevorzugt in dem Steuergerät in dem auch die weiteren Verfahrensschritte ausgeführt werden) ist es dann möglich aus diesen Druckverläufen einen Auftreffzeitpunkt ($t_1$, $t_2$) und einen Auftreffort ($s_1$, $s_2$) zu berechnen.

Beim Aufprall auf ein Hindernis werden nacheinander zuerst (zum Zeitpunkt $t_1$) der erste Druckschlauch und anschließend (zum Zeitpunkt $t_2$) der zweite Druckschlauch deformiert. Beide Deformationen führen zu einem unmittelbaren Druckanstieg und damit Drucksignal an den die jeweiligen Druckschläuche abschließenden Drucksensoren. Die jeweiligen Zeitpunkte $t_1$ und $t_2$ können im Steuergerät beispielsweise durch Schwellwertüberschreitungen eines jeweils ersten Drucksensors des jeweiligen Druckschlauchsensors detektiert werden.

Unter dem Auftreffzeitpunkt $t_1$ bzw. $t_2$ ist der Zeitpunkt zu verstehen, zu dem ein Aufprall mit dem ersten bzw.

zweiten Druckschlauchsensor detektiert wird. Der Auftreffort $s_1$ bzw. $s_2$ ist der Ort, an dem der Aufprall mit dem ersten bzw. zweiten Druckschlauchsensor erfasst wurde. $s_1$ und $s_2$ sind vorzugsweise entlang der jeweiligen Druckschlauchsensoren definiert. So können $s_1$ und $s_2$ beispielsweise den Abstand zwischen dem Ort des Auftreffens und einer Mitte des Druckschlauchs angeben.

In einer weiteren bevorzugten Ausführungsform des Verfahrens ist der in Schritt b) bestimmte mindestens eine Kollisionsparameter mindestens einer der folgenden Parameter:

- ein Betrag einer Kollisionsgeschwindigkeit $\overline{v}_{intr}$,
- eine Komponente der Kollisionsgeschwindigkeit $v_{intr,x}$ entlang der Fahrtrichtung des Kraftfahrzeugs,
- ein Kollisionswinkel $\alpha$.

Die Kollisionsgeschwindigkeit $v_{intr}$ ist eine vektorielle Größe, die zumindest eine Komponente entlang der Fahrtrichtung $x$ des Kraftfahrzeugs, $v_{intr,x}$, und eine dazu senkrechte Komponente, $v_{intr,y}$, umfasst. $\overline{v}_{intr}$ ist der Betrag des Vektors $v_{intr}$. Der Kollisionswinkel $\alpha$ ist der Winkel, unter dem ein Kollisionsobjekt auf das Kraftfahrzeug bzw. auf dessen Vorderseite auftrifft.

Aus der Zeitdifferenz $\Delta t = t_2 - t_1$ zwischen den Zeitpunkten $t_2$ (Druckanstieg im zweiten Druckschlauch) und $t_1$ (Druckanstieg im ersten Druckschlauch) und dem in Fahrtrichtung longitudinalen Abstand $d$ zwischen beiden Druckschlauchsensoren kann direkt die (gemittelte) Kollisionsgeschwindigkeit $\overline{v}_{intr,x}$ ermittelt werden zu

$$\overline{v}_{intr,x} = d/\Delta t. \qquad (1)$$

Für den Fall, dass beide Druckschlauchsensoren sehr weit vorn im Kraftfahrzeug angebracht sind (insbesondere vor härteren Crashstrukturen wie beispielsweise Crashboxen) kann in guter Näherung davon ausgegangen werden, dass in der frühen Crashphase, in welcher die beiden Druckschlauchsensoren deformiert werden, noch kein nennenswerter Geschwindigkeitsabbau infolge der Kollision erfolgt ist. Dies gilt umso mehr, je höher die Kollisionsgeschwindigkeit ist. D.h. die beiden Kollisionspartner bewegen sich noch nahezu mit initialer Geschwindigkeit. Dies bedeutet, dass die nach Gleichung (1) ermittelte gemittelte Kollisionsgeschwindigkeit auch der anfänglichen (initialen) Kollisionsgeschwindigkeit $\overline{v}_{intr,x}(0)$ entspricht,

$$\overline{v}_{intr,x} \approx v_{intr,x}(0). \qquad (2)$$

Für den Fall, dass der zweite Druckschlauchsensor in Fahrtrichtung weiter hinten im Kraftahrzeug angeordnet ist und vor der Deformation des zweiten Druckschlauchsensors härtere Crashstrukturen wie z.B. Crashboxen deformiert werden müssen, wird zum Zeitpunkt $t_2$ schon eine Verringerung der Kollisionsgeschwindigkeit vorliegen. Dies gilt insbesondere bei langsamen Kollisionen, in welchen die Deformation der Crashstrukturen zu einem höheren Geschwindigkeitsabbau führt. In einem solchen Fall wird die gemessene mittlere Kollisionsgeschwindigkeit etwas geringer als die initiale Kollisionsgeschwindigkeit sein,

$$\overline{v}_{intr,x} < v_{intr,x}(0), \qquad (3)$$

und zwar umso deutlicher, je langsamer der Crash ist. Interessanterweise eignet sich das so gemessene $\overline{v}_{intr,x}$ damit sogar besser zur Diskriminierung von schnellen und langsamen Crashs als die zunächst "korrektere" Information $v_{intr,x}(0)$.

Soll dennoch auch in diesem Fall das initiale $v_{intr,x}(0)$ ermittelt werden, so kann die Verringerung der Kollisionsgeschwindigkeit über den Geschwindigkeitsabbau des Kraftfahrzeugs bei der Kollision $dv(t)$ abgeschätzt werden. Insbesondere dazu wird in einer weiteren bevorzugten Ausführungsform des Verfahrens in Schritt b) bei der Bestimmung einer Kollisionsgeschwindigkeit $v_{intr}$ als dem mindestens einen Kollisionsparameter zumindest eine Verzögerung des Kraftfahrzeugs aufgrund einer Kollision berücksichtigt.

Der Geschwindigkeitsabbau des Kraftfahrzeugs wird vorzugsweise im Steuergerät (das insbesondere das zentrale Airbagsteuergerät sein kann) durch Integration des gemessenen longitudinalen Beschleunigungssignals $a(t)$ ermittelt. Hier ist anzumerken, dass die Kollisionsgeschwindigkeit bei der Kollision von der Relativgeschwindigkeit der Unfallgegner und den Steifigkeitsverhältnissen bestimmt wird, wohingegen der Geschwindigkeitsabbau von der Relativgeschwindigkeit der Unfallgegner und den Massenverhältnissen bestimmt wird. Da Fahrzeugmassen und Steifigkeiten aber eine gewisse Korrelation zeigen, ist es eine gute Näherung, für die Verringerung der Kollisionsgeschwindigkeit einen mit einem fahrzeugspezifischen Faktor f umskalierten Geschwindigkeitsabbau anzusetzen. Idealerweise enthält der Faktor f auch über C2X-Kommunikation erhaltene Informationen zur Masse und Steifigkeit des Unfallgegners.

Ganz allgemein kann man also ansetzen:

$$v_{intr,x}(t) = v_{intr,x}(0) - f \cdot dv(t). \tag{4}$$

$$v_{intr,x}(t_1) = v_{intr,x}(0) - f \cdot dv(t_1) \approx v_{intr,x}(0). \tag{5}$$

$$v_{intr,x}(t_2) = v_{intr,x}(0) - f \cdot dv(t_2). \tag{6}$$

Die Vereinfachung in Gleichung (5) bringt zum Ausdruck, dass bei Deformation des Stoßfängerschaums kein messbarer Geschwindigkeitsabbau des Gesamtfahrzeugs vorliegt. Insbesondere daher kann *dv(t₁)* vernachlässigt werden.

Unter Annahme eines linearen Abfalls gilt dann beispielsweise

$$\bar{v}_{intr,x} = (v_{intr,x}(t_1) + v_{intr,x}(t_2))/2 = v_{intr,x}(0) - (dv(t_1) + dv(t_2))/2 \tag{7}$$

und damit

$$v_{intr,x}(0) = d/\Delta t + (dv(t_1) + dv(t_2))/2 \approx d/\Delta t + dv(t_2)/2. \tag{8}$$

Da der Verlauf *dv(t)* exakt bestimmbar ist, muss aber nicht unbedingt auf die Annahme eines linearen Rückgangs zurückgegriffen werden. Auch eine exakte Bestimmung von $v_{intr,x}(0)$ ist möglich. Durch Integration von $v_{intr,x}(t)$ zwischen den Zeitpunkten $t_1$ und $t_2$ ergibt sich gerade der Abstand *d* zwischen den beiden Druckschlauchsensoren,

$$d = \int_{t1}^{t2} v_{intr,x}(t)dt = v_{intr,x}(0) \cdot \Delta t - \int_{t1}^{t2} dv(t)dt$$

und damit

$$v_{intr,x}(0) = \frac{d + \int_{t1}^{t2} dv(t)dt}{\Delta t}. \tag{9}$$

Damit lautet eine besonders allgemeine Vorschrift zur Ermittlung der initialen Kollisionsgeschwindigkeit: Bestimmung der Zeitpunkte $t_1$ und $t_2$ und Bilden der Differenz *Δt*; Integration des Geschwindigkeitsabbaus zwischen diesen beiden Zeitpunkten und Berechnung nach Gleichung (9).

In der Praxis werden aber auch die Gleichungen (8) und auch (1) genügend genaue Bestimmungen erlauben.

In einer anderen Realisierung von Gleichung (1) ist es auch möglich, die Kollisionsgeschwindigkeit gar nicht explizit zu berechnen, sondern lediglich die Zeitdifferenz *Δt* zu betrachten, die invers proportional zur Kollisionsgeschwindigkeit ist.

Aus der Laufzeitdifferenz $\Delta T = T_L - T_R$ zwischen den Drucksignalen auf der linken und rechten Seite eines Druckschlauchsensors kann die Auftreffposition $s_1$ bzw. $s_2$ ermittelt werden. Da die unterschiedlichen Wege vom Auftreffpunkt *s* (gemessen beispielsweise von der Mittelachse) zu den beiden Drucksensoren (zwischen denen der Wegunterschied damit 2*s* beträgt) zu unterschiedlichen Signallaufzeiten führen, ergibt sich die Auftreffposition *s* aus der Zeitdifferenz *ΔT* und der Schallgeschwindigkeit *c* zu

$$s = c\,\Delta T / 2. \tag{10}$$

Wendet man dieses Verfahren in der vorliegenden Sensorkonfiguration auf beide Druckschlauchsensoren an, erhält man zwei Auftrefforte $s_1$ und $s_2$. Die Unterschiede zwischen beiden Orten lassen Rückschlüsse auf die Richtung der Kollision zu. Beispielsweise kann der Kollisionswinkel $\alpha$ direkt ermittelt werden über

$$\tan(\alpha) = (s_1 - s_2)/d. \qquad (11)$$

Auch hier ist es möglich, den Kollisionswinkel nach Gleichung (11) gar nicht explizit zu berechnen, sondern stattdessen die Differenz der Auftrefforte $s_1$ - $s_2$ zu verwenden.

Bei Kollisionen mit $\alpha \neq 0$ ist tatsächlich ein größerer Intrusionsweg nötig, um von einer Deformation des ersten Druckschlauchsensors zu einer Deformation des zweiten Druckschlauchsensors zu gelangen. Dieser Intrusionsweg beträgt

$$l = \sqrt{d^2 + (s_1 - s_2)^2} \ . \qquad (12)$$

Anstelle der longitudinalen Kollisionsgeschwindigkeit $\overline{v}_{intr,x}$ aus Gleichung (1) ergibt sich der Betrag der mittleren vektoriellen Kollisionsgeschwindigkeit $\overline{v}_{intr}$ zu

$$\overline{v}_{intr} \ = \ \frac{l}{\Delta t} = \frac{\sqrt{d^2 + (s1 - s2)^2}}{\Delta t} \ . \qquad (13)$$

Die Richtung ist bereits durch den oben bestimmten Kollisionswinkel $\alpha$ gegeben.

Die ermittelten Merkmale, also insbesondere die ermittelte Kollisionsgeschwindigkeit und/oder der ermittelte Kollisionswinkel, können für eine direkte oder indirekte Ansteuerung der mindestens einen Sicherheitsfunktion (also insbesondere von Rückhaltemitteln) verwendet werden. Dazu sind insbesondere die folgenden zwei Ausführungsformen bevorzugt.

In einer bevorzugten Ausführungsform des Verfahrens wird das Auslösesignal in Schritt c) ausgegeben, wenn eine Komponente $v_{intr,x}$ der Kollisionsgeschwindigkeit entlang der Fahrtrichtung des Kraftfahrzeugs oder ein Betrag einer Kollisionsgeschwindigkeit ($\overline{v}_{intr}$) eine erste vorgegebene Schwelle überschreitet.

Die ermittelten Merkmale der Kollisionsgeschwindigkeit und der Kollisionsrichtung stellen die zentralen Parameter für die Schwere eines Unfalls dar und könnten daher direkt zur Ansteuerung der mindestens einen Sicherheitsfunktion eingesetzt werden. Dies setzt allerdings eine sehr robuste Integration der Druckschläuche ins Kraftfahrzeug und eine vollständige Diagnostizierbarkeit von Fehlern im Druckschlauchsystem (insbesondere einschließlich von Rissen im Druckschlauch) voraus.

In dieser Ausführungsform kann für Auslöseschwellen eines Frontalgorithmus (wie Gurtstraffer, Airbag erster Stufe, Airbag zweiter Stufe, ...) eine erste Schwelle *Thd* auf eine der Kollisionsgeschwindigkeiten angesetzt werden.

Die erste Schwelle kann insbesondere als ein fester Wert vorgegeben sein.

In einer weiteren bevorzugten Ausführungsform des Verfahrens ist die vorgegebene erste Schwelle zumindest in Abhängigkeit von einem Auftreffort $s_1$, $s_2$ mindestens eines der Druckschlauchsensoren und/oder von einem Kollisionswinkel $\alpha$ vorgegeben.

Die erste vorgegebene Schwelle kann insbesondere als Funktion des Kollisionswinkels $\alpha$ variiert werden. Eine Auslöseentscheidung kann z.B. über die gemittelte longitudinale Kollisionsgeschwindigkeit $\overline{v}_{intr,x}$ gemäß Gleichung (2) dann erreicht werden, wenn

$$\overline{v}_{intr,x} > \text{Thd}(\alpha). \qquad (14)$$

Beispielsweise gilt für $\alpha$ = 0° vorzugsweise eine erste Schwelle von 20 km/h und für $\alpha$ = 30° von 26 km/h. Insbesondere kann eine Schwellwertkurve als eine stetige Funktion des Kollisionswinkels $\alpha$ definiert sein. Alternativ können die Schwellwerte stufenweise über gewisse Winkelbereiche variiert werden.

Auch die weiteren oben eingeführten Parameter der Kollisionsgeschwindigkeit können für den Schwellwertvergleich verwendet werden. Verwendet man bereits den Betrag der vektoriellen Kollisionsgeschwindigkeit für eine Schwellwertabfrage analog zu Gleichung (14), so kann die Variation als Funktion des Kollisionswinkels $\alpha$ beispielsweise geringer ausfallen.

In einer weiteren bevorzugten Ausführungsform des Verfahrens wird das Auslösesignal in Schritt c) ausgegeben, wenn eine Differenz $\Delta t$ der Auftreffzeitpunkte $t_1, t_2$ mindestens zweier der Druckschlauchsensoren eine zweite vorgegebene Schwelle unterschreitet.

Die zweite Schwelle kann insbesondere als ein fester Wert vorgegeben sein.

In einer weiteren bevorzugten Ausführungsform des Verfahrens ist die zweite vorgegebene Schwelle zumindest in Abhängigkeit von einem Auftreffort $s_1$, $s_2$ mindestens eines der Druckschlauchsensoren und/oder von einem Kollisionswinkel $\alpha$ vorgegeben.

In dieser Ausführungsform wird neben der Kollisionsrichtung auch noch der Auftreffort auf den ersten Druckschlauch $s_1$ mit verwendet. Damit können gerade sogenannte Offsetcrashes (bei denen $s_1$ deutlich von Null verschieden, $\alpha$ aber nahe Null ist) von Kollisionen mit voller Überdeckung (bei denen $s_1$ und $\alpha$ beide jeweils nahe Null sind) unterschieden werden. Gleichung (14) ist dann zu verallgemeinern zu

$$\bar{v}_{\text{intr,x}} > \text{Thd}(\alpha, s_1) \qquad\qquad (15)$$

bzw. allgemeiner zu

$$\bar{v}_{\text{intr,x}} > \text{Thd}(s_1, s_2), \qquad\qquad (16)$$

da der Kollisionswinkel $\alpha$ selbst nach Gleichung (11) eine Funktion von $s_1$ und $s_2$ ist.

Es ist auch möglich, die Schwellwertabfragen direkt auf der gemessenen Zeitdifferenz $\Delta t$ anzusetzen. Ein äquivalentes Kriterium zu Gleichung (16) wäre dann z.B.

$$\Delta t < \text{Thd}'(s_1, s_2). \qquad\qquad (17)$$

In einer weiteren bevorzugten Ausführungsform des Verfahrens wird das Auslösesignal in Schritt c) weiterhin in Abhängigkeit von mindestens einem Parameter einer zusätzlichen Kollisionserkennung ausgegeben.

Die Auslösung der mindestens einen Sicherheitsfunktion erfolgt in dieser Ausführungsform nicht allein über die Druckschlauchsensorik im vorderen Bereich des Kraftfahrzeugs. Zusätzlich kann beispielsweise eine konventionelle Beschleunigungssensorik als zusätzliche Kollisionserkennung mit einbezogen werden. Ein bevorzugter Ansatz besteht darin, dass in Schritt c) eine Sensitivität eines herkömmlichen beschleunigungsbasierten Algorithmus beeinflusst wird. Diese Beeinflussung ist vorzugsweise eine Funktion der erkannten Kollisionsgeschwindigkeiten, der Zeitdifferenz $\Delta t$ zwischen den Auftreffzeitpunkten $t_1$ und $t_2$, dem Kollisionswinkel $\alpha$ und/oder der Auftrefforte $s_1$ und $s_2$. Beispielsweise kann eine Sensitivierung dann erfolgen, wenn Bedingungen ähnlich zu Gleichung (14) bis (17) erfüllt sind. Die Sensitivierung selbst kann durch Absenkung von Auslöseschwellen in den existierenden Auslöselogiken erfolgen, oder aber durch Umschaltung auf andere, sensitivere Auslöselogiken. Dieses Vorgehen kann auch als "Pfadkonzept" bezeichnet werden.

Als ein weiterer Aspekt wird ein Steuergerät für ein Kraftfahrzeug vorgestellt, welches zur Durchführung des beschriebenen Verfahrens eingerichtet ist. Die weiter vorne für das Verfahren beschriebenen besonderen Vorteile und Ausgestaltungsmerkmale sind auf das Steuergerät anwendbar und übertragbar. Weiterhin wird ein Computerprogramm vorgestellt, welches eingerichtet ist, alle Schritte des beschriebenen Verfahrens auszuführen. Zudem wird ein maschinenlesbares Speichermedium vorgestellt, auf dem das beschriebene Computerprogramm gespeichert ist. Die weiter vorne für das Verfahren und das Steuergerät beschriebenen besonderen Vorteile und Ausgestaltungsmerkmale sind auf das Computerprogramm und das maschinenlesbare Speichermedium anwendbar und übertragbar.

Weitere Einzelheiten der Erfindung und ein Ausführungsbeispiel, auf welches die Erfindung jedoch nicht beschränkt ist, werden anhand der Zeichnungen näher erläutert. Es zeigen schematisch:

Fig. 1:     eine Darstellung eines Kraftfahrzeugs mit zwei Druckschlauchsensoren, das zur Durchführung des beschriebenen Verfahrens eingerichtet ist,

Fig. 2:     eine seitliche Querschnittdarstellung des Kraftfahrzeugs aus Fig. 1,

Fig. 3:     ein zeitlicher Verlauf von Drücken in den Druckschlauchsensoren des Kraftfahrzeugs aus den Fig. 1 und 2,

Fig. 4:     eine vergrößerte Darstellung der Druckschlauchsensoren des Kraftfahrzeugs aus den Fig. 1 und 2, und

Fig. 5:     eine Darstellung des beschriebenen Verfahrens.

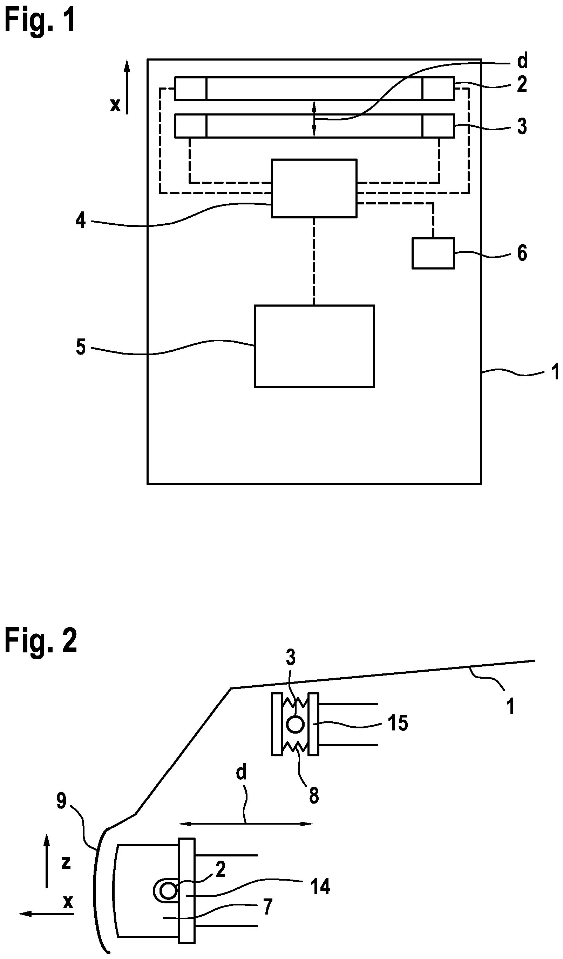

In Fig. 1 ist ein Kraftfahrzeug 1 mit einem ersten Druckschlauchsensor 2 und einem zweiten Druckschlauchsensor 3 gezeigt. Beide Druckschlauchsensoren 2 und 3 sind an ein Steuergerät 4 angebunden. Über das Steuergerät 4 kann eine Sicherheitsfunktion 5 ausgelöst werden. Dazu ist das Steuergerät 4 auch an eine zusätzliche Kollisionserkennung 6 angebunden. In Fahrtrichtung x (von unten nach oben in dieser Darstellung) sind die beiden Druckschlauchsensoren 2 und 3 um einen Abstand d voneinander beabstandet angeordnet. Ebenfalls markiert ist die Hochrichtung (z).

Fig. 2 zeigt eine mögliche Realisierung eines 2-PTS-Systems in dem Kraftfahrzeug 1 aus Fig. 1. Der erste Druckschlauchsensor 2 ist dabei konventionell in einem Stoßfänger 9 in einer Nut eines Absorptionsschaums 7, der auf einem Querträger 14 aufliegt, verbaut. Der zweite Druckschlauchsensor 3 ist in diesem Beispiel auf einem Kühlerquerträger 15 angebracht. Als ein Absorptionselement 8 ("energy absorber") ist hierbei nicht ein Schaum, sondern ein mechanisches Element vorgesehen. Die konkrete Ausgestaltung ist dabei nicht entscheidend. Die Aufgabe des Absorptionselements 8 besteht lediglich darin, die Kraft kontrolliert auf den zweiten Druckschlauchsensor 3 einzukoppeln und ihn mechanisch zu schützen. Das Beispiel der Fig. 2 zeigt insbesondere, dass die Druckschlauchsensoren 2 und 3 nicht notwendigerweise in der gleichen Höhe (in der Darstellung in der Richtung von oben nach unten) angeordnet sein müssen.

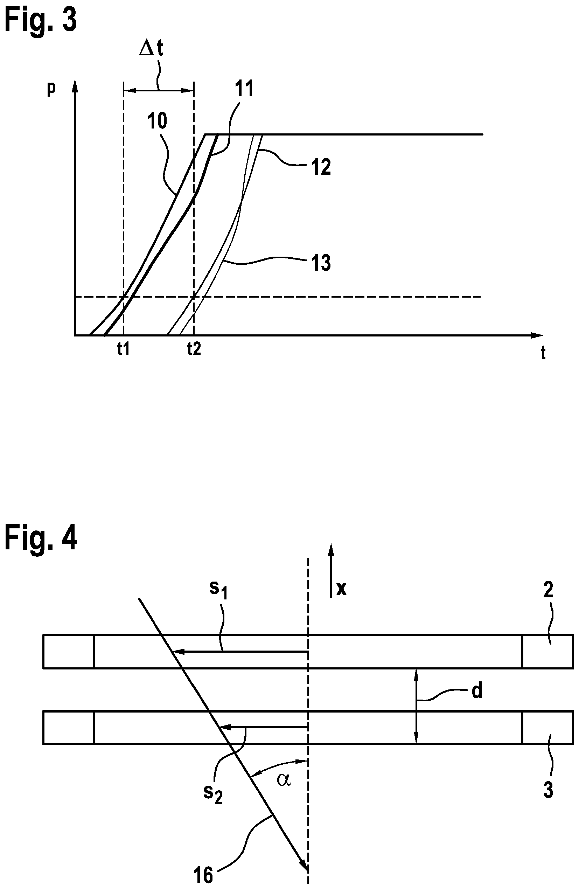

In Fig. 3 ist ein zeitlicher Verlauf von Drücken p in den Druckschlauchsensoren 2 und 3 des Kraftfahrzeugs 1 aus den Fig. 1 und 2 gezeigt. Ein erstes Drucksignal 10 ist mit einem linken Drucksensor des ersten Druckschlauchsensors 2 und ein zweites Drucksignal 11 mit einem rechten Drucksensor des ersten Druckschlauchsensors 2 aufgenommen. Ein drittes Drucksignal 12 ist mit einem linken Drucksensor des zweiten Druckschlauchsensors 3 und ein viertes Drucksignal 13 mit einem rechten Drucksensor des zweiten Druckschlauchsensors 3 aufgenommen. Zu erkennen ist insbesondere, dass der Druckanstieg im zweiten Druckschlauchsensor 3 später eintritt als im ersten Druckschlauchsensor 2. Die Auftreffzeitpunkte $t_1$ und $t_2$ sind entsprechend des Abstandes d der Druckschlauchsensoren 2 und 3 um eine Zeitdifferenz $\Delta t$ verschieden. Weiterhin ist zu erkennen, dass der Druckanstieg in den jeweils linken Drucksensoren früher eintritt. Das liegt daran, dass der Auftreffort in diesem Beispiel links von der Mitte des Kraftfahrzeugs 1 liegt und die Druckwellen entsprechend die linken Drucksensoren früher erreichen. Es handelt sich in diesem Beispiel also um einen linksseitigen Crash.

In Fig. 4 ist eine vergrößerte Darstellung der Druckschlauchsensoren 2 und 3 des Kraftfahrzeugs 1 aus den Fig. 1 und 2 gezeigt. Die Fahrtrichtung x weist hier nach oben. Zu erkennen ist insbesondere der longitudinale (also in Richtung x gemessene) Abstand d zwischen den beiden Druckschlauchsensoren 2 und 3. Durch einen Pfeil 16 ist der Aufprall eines Kollisionspartners angedeutet. Dieser erfolgt unter einem Kollisionswinkel $\alpha$. Von der (durch eine gestrichelte Linie angedeuteten) Mitte der Druckschlauchsensoren 2 und 3 aus gemessen geben die Auftrefforte $s_1$ und $s_2$ an, wo der Kollisionspartner auf die Druckschlauchsensoren 2 und 3 auftrifft.

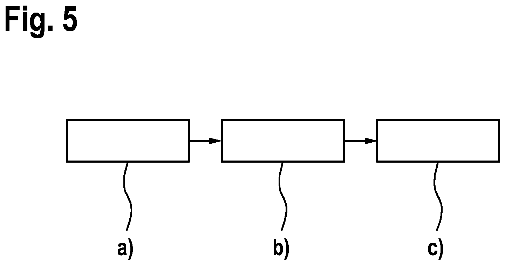

Fig. 5 ist eine schematische Darstellung eines Verfahrens zur Erzeugung eines Auslösesignals zum Auslösen mindestens einer Sicherheitsfunktion 5 eines Kraftfahrzeugs 1, umfassend die Verfahrensschritte:

a) Empfangen von jeweiligen Signalen von mindestens zwei Druckschlauchsensoren 2 und 3,
b) Bestimmen mindestens eines Kollisionsparameters aus den gemäß Schritt a) empfangenen Signalen,
c) Ausgeben des Auslösesignals für die mindestens eine Sicherheitsfunktion 5 in Abhängigkeit von dem in Schritt b) bestimmten mindestens einen Kollisionsparameter.

**Patentansprüche**

1. Verfahren zur Erzeugung eines Auslösesignals zum Auslösen mindestens einer Sicherheitsfunktion (5) eines Kraftfahrzeugs (1), umfassend zumindest die folgenden Verfahrensschritte:

a) Empfangen von jeweiligen Signalen von mindestens zwei Druckschlauchsensoren (2,3),
b) Bestimmen mindestens eines Kollisionsparameters aus den gemäß Schritt a) empfangenen Signalen,
c) Ausgeben des Auslösesignals für die mindestens eine Sicherheitsfunktion (5) in Abhängigkeit von dem in Schritt b) bestimmten mindestens einen Kollisionsparameter,

**dadurch gekennzeichnet, dass**

in Schritt a) jeweilige Signale von mindestens zwei Druckschlauchsensoren (2,3) empfangen werden, die zumindest in Fahrtrichtung (x) des Kraftfahrzeus (1) beabstandet voneinander angeordnet sind.

2. Verfahren nach einem der vorhergehenden Ansprüche, wobei die in Schritt a) empfangenen Signale der mindestens zwei Druckschlauchsensoren (2,3) jeweils zumindest einen der folgenden Parameter repräsentieren:

- einen Auftreffzeitpunkt ($t_1$, $t_2$) und
- einen Auftreffort ($s_1$, $s_2$).

3. Verfahren nach einem der vorhergehenden Ansprüche, wobei der in Schritt b) bestimmte mindestens eine Kollisionsparameter mindestens einer der folgenden ist:

- ein Betrag einer Kollisionsgeschwindigkeit ($\bar{v}_{intr}$),
- eine Komponente der Kollisionsgeschwindigkeit ($v_{intr,x}$) entlang der Fahrtrichtung (x) des Kraftfahrzeugs (1),
- ein Kollisionswinkel ($\alpha$).

4. Verfahren nach einem der vorhergehenden Ansprüche, wobei in Schritt b) bei der Bestimmung einer Kollisionsgeschwindigkeit *($v_{intr}$)* als dem mindestens einen Kollisionsparameter zumindest eine Verzögerung des Kraftfahrzeugs (1) aufgrund einer Kollision berücksichtigt wird.

5. Verfahren nach einem der vorhergehenden Ansprüche, wobei das Auslösesignal in Schritt c) ausgegeben wird, wenn eine Komponente ($v_{intr,x}$) der Kollisionsgeschwindigkeit entlang der Fahrtrichtung (x) des Kraftfahrzeugs (1) oder ein Betrag einer Kollisionsgeschwindigkeit ($\bar{v}_{intr}$) eine erste vorgegebene Schwelle überschreitet.

6. Verfahren nach Anspruch 5, wobei die erste vorgegebene Schwelle zumindest in Abhängigkeit von einem Auftreffort ($s_1$, $s_2$) mindestens eines der Druckschlauchsensoren (2,3) und/oder von einem Kollisionswinkel ($\alpha$) vorgegeben ist.

7. Verfahren nach einem der vorhergehenden Ansprüche, wobei das Auslösesignal in Schritt c) ausgegeben wird, wenn eine Differenz ($\Delta t$) der Auftreffzeitpunkte ($t_1$, $t_2$) mindestens zweier der Druckschlauchsensoren (2,3) eine zweite vorgegebene Schwelle unterschreitet.

8. Verfahren nach Anspruch 7, wobei die zweite vorgegebene Schwelle zumindest in Abhängigkeit von einem Auftreffort ($s_1$, $s_2$) mindestens eines der Druckschlauchsensoren (2,3) und/oder von einem Kollisionswinkel ($\alpha$) vorgegeben ist.

9. Verfahren nach einem der vorhergehenden Ansprüche, wobei das Auslösesignal in Schritt c) weiterhin in Abhängigkeit von mindestens einem Parameter einer zusätzlichen Kollisionserkennung (6) ausgegeben wird.

10. Steuergerät (4) für ein Kraftfahrzeug (1), welches zur Durchführung eines Verfahrens nach einem der vorhergehenden Ansprüche eingerichtet ist.

11. Computerprogramm, welches eingerichtet ist, alle Schritte des Verfahrens nach einem der Ansprüche 1 bis 9 auszuführen.

12. Maschinenlesbares Speichermedium, auf dem das Computerprogramm nach Anspruch 11 gespeichert ist.

**Claims**

1. Method for generating a trigger signal for triggering at least one safety function (5) of a motor vehicle (1), comprising at least the following method steps:

a) receiving respective signals from at least two pressure tube sensors (2, 3),
b) determining at least one collision parameter from the signals received in step a),
c) outputting the trigger signal for the at least one safety function (5) depending on the at least one collision parameter determined in step b),

**characterized in that**,
in step a), respective signals are received from at least two pressure tube sensors (2, 3) which are arranged at a distance from one another at least in the direction of travel (x) of the motor vehicle (1).

2. Method according to one of the preceding claims, wherein the signals from the at least two pressure tube sensors (2, 3) received in step a) each represent at least one of the following parameters:

- an impact time ($t_1$, $t_2$) and
- an impact location ($s_1$, $s_2$).

3. Method according to either of the preceding claims, wherein the at least one collision parameter determined in step b) is at least one of the following:

   - an absolute value of a collision speed ($\bar{v}_{ntr}$),
   - a component of the collision speed ($v_{intr,x}$) along the direction of travel (x) of the motor vehicle (1),
   - a collision angle ($\alpha$).

4. Method according to one of the preceding claims, wherein, in step b), for the determination of a collision speed ($\underline{v}_{intr}$) as the at least one collision parameter, at least one deceleration of the motor vehicle (1) due to a collision is taken into account.

5. Method according to one of the preceding claims, wherein the trigger signal is output in step c) when a component ($v_{intr,x}$) of the collision speed along the direction of travel (x) of the motor vehicle (1) or an absolute value of a collision speed ($\bar{v}_{intr}$) exceeds a first predefined threshold.

6. Method according to Claim 5, wherein the first predefined threshold is predefined at least depending on an impact location ($s_1$, $s_2$) of at least one of the pressure tube sensors (2, 3) and/or on a collision angle ($\alpha$).

7. Method according to one of the preceding claims, wherein the trigger signal is output in step c) when a difference ($\Delta t$) in the impact times ($t_1$, $t_2$) of at least two of the pressure tube sensors (2, 3) undershoots a second predefined threshold.

8. Method according to Claim 7, wherein the second predefined threshold is predefined at least depending on an impact location ($s_1$, $s_2$) of at least one of the pressure tube sensors (2, 3) and/or on a collision angle ($\alpha$).

9. Method according to one of the preceding claims, wherein the trigger signal is output in step c) furthermore depending on at least one parameter of an additional collision detection (6).

10. Controller (4) for a motor vehicle (1), which controller is configured to carry out a method according to one of the preceding claims.

11. Computer program which is configured to execute all of the steps of the method according to one of Claims 1 to 9.

12. Machine-readable storage medium on which the computer program according to Claim 11 is stored.

**Revendications**

1. Procédé permettant de générer un signal de déclenchement pour déclencher au moins une fonction de sécurité (5) d'un véhicule automobile (1), comprenant au moins les étapes de procédé suivantes consistant à :

   a) recevoir des signaux respectifs d'au moins deux capteurs de tuyau flexible sous pression (2, 3),
   b) déterminer au moins un paramètre de collision à partir des signaux reçus selon l'étape a),
   c) émettre le signal de déclenchement pour ladite au moins une fonction de sécurité (5) en fonction du au moins un paramètre de collision déterminé à l'étape b),

   **caractérisé en ce que** à l'étape a), des signaux respectifs sont reçus d'au moins deux capteurs de tuyau flexible sous pression (2, 3) qui sont disposés à distance les uns des autres au moins dans le sens de la marche (x) du véhicule automobile (1).

2. Procédé selon l'une quelconque des revendications précédentes, dans lequel les signaux reçus à l'étape a) des au moins deux capteurs de tuyau flexible sous pression (2, 3) représentent respectivement au moins l'un des paramètres suivants :

   - un temps d'impact ($t_1$, $t_2$), et
   - un emplacement d'impact ($s_1$, $s_2$).

**3.** Procédé selon l'une quelconque des revendications précédentes, dans lequel ledit au moins un paramètre de collision déterminé à l'étape b) est au moins l'un des suivants :

- une grandeur d'une vitesse de collision ($\overline{v}_{intr}$),
- une composante de la vitesse de collision ($V_{intr,x}$) le long du sens de la marche (x) du véhicule automobile (1),
- un angle de collision (a).

**4.** Procédé selon l'une quelconque des revendications précédentes, dans lequel à l'étape b), lors de la détermination d'une vitesse de collision ($v_{intr}$) comme ledit au moins un paramètre de collision, au moins une décélération du véhicule automobile (1) en raison d'une collision est prise en compte.

**5.** Procédé selon l'une quelconque des revendications précédentes, dans lequel le signal de déclenchement est émis à l'étape c) si une composante ($v_{intr,x}$) de la vitesse de collision le long du sens de la marche (x) du véhicule automobile (1) ou une grandeur d'une vitesse de collision ($\overline{v}_{intr}$) dépasse un premier seuil prédéfini.

**6.** Procédé selon la revendication 5, dans lequel le premier seuil prédéfini est prédéfini au moins en fonction d'un emplacement d'impact ($s_1$, $s_2$) au moins d'un des capteurs de tuyau flexible sous pression (2, 3) et/ou d'un angle de collision ($\alpha$).

**7.** Procédé selon l'une quelconque des revendications précédentes, dans lequel le signal de déclenchement est émis à l'étape c) si une différence ($\Delta t$) des temps d'impact ($t_1$, $t_2$) d'au moins deux des capteurs de tuyau flexible sous pression (2, 3) est inférieure à un deuxième seuil prédéfini.

**8.** Procédé selon la revendication 7, dans lequel le deuxième seuil prédéfini est prédéfini au moins en fonction d'un emplacement d'impact ($s_1$, $s_2$) d'au moins l'un des capteurs de tuyau flexible sous pression (2, 3) et/ou d'un angle de collision (a).

**9.** Procédé selon l'une quelconque des revendications précédentes, dans lequel le signal de déclenchement est émis à l'étape c) en outre en fonction d'au moins un paramètre d'une détection de collision supplémentaire (6) .

**10.** Appareil de commande (4) pour un véhicule automobile (1) qui est conçu pour l'exécution d'un procédé selon l'une quelconque des revendications précédentes.

**11.** Programme informatique qui est conçu pour exécuter toutes les étapes du procédé selon l'une quelconque des revendications 1 à 9.

**12.** Support de stockage lisible par machine, sur lequel est stocké le programme informatique selon la revendication 11.

## Fig. 1

## Fig. 2

# Fig. 3

Δt

p

10  11

12

13

t1    t2

t

# Fig. 4

s₁

x

2

d

s₂

α

16

3

# Fig. 5

a)　　　　　　b)　　　　　　c)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014208143 A1